# EUROPEAN PATENT SPECIFICATION

(11) **EP 1 319 452 B1**
(45) Date of publication and mention of the grant of the patent: **20.04.2005**
(21) Application number: 02024280.6
(22) Date of filing: 31.10.2002
(51) Int. Cl.: B21D 53/50, C23C 18/31, A44B 19/42, C22C 9/04

(54) **Coated slider fastener having coated constituent elements and method of its manufacture**
Reissverschluss bestehend aus beschichteten Elementen und Verfahren zu dessen Herstellung
Fermeture à glissière avec un revêtement protecteur à la surface des éléments et procédé de sa fabrication

(30) Priority: 14.12.2001 JP 2001381143
(43) Date of publication of application: 18.06.2003
(73) Proprietor: YKK Corporation, Chiyoda-ku, Tokyo 101 8642 (JP)
(72) Inventor: Kikukawa, Norio, Namerikawa-shi, Toyama 936-0027 (JP); Sugimoto, Yasuhiko, Nakaniikawa-gun, Toyama 930-0373 (JP); Fukuyama, Takahiro, Kurobe-shi, Toyama 938-0041 (JP)
(74) Representative: Liesegang, Roland, Dr.-Ing.

(56) References cited:
- EP-A- 1 061 148
- EP-A- 1 066 895

## Description

### BACKGROUND OF THE INVENTION

### 1. Field of the Invention

The present invention relates to a slide fastener made of a metal or an alloy, and to a method of manufacturing the slid fastener and an attachment having a plurality of constituent members such as a slide fastener chain, attached to clothing or the like.

### 2. Description of the Prior Art

Conventionally, to improve designability and corrosion resistance, articles have been plated through various methods. For example, with regard to slide fasteners, a large number of metal elements are mounted onto fastener tapes, and then the fastener tapes are electroless-plated. In another method disclosed in Japanese Utility Model Registration No. 2587180, a conductive wire is inserted along an edge of each fastener tapes in its longitudinal direction, a large number of elements are mounted on a slide fastener with spaces therebetween, and then the elements are electrolytically plated.

Further from EP 1 066 895 A2 an article equipped with structural members and a method for its manufacture is known, whereas a plating of the structural members is realized either by electrolytic plating or by electroless plating or by other plating methods, also dry plating, like CVD.

From EP 1 061 148 A1, a nickel-free white copper alloy material is known, whereas the forming of the coating layer is realized either by a wet plating method or a dry plating method, in case of wet plating methods either by electrolytic plating, electroless plating, melt plating or the like.

However, in the former of the above, i.e. the case of a coating by electroless plating, since the coating is not dense, an article that is good from the perspective of designability and corrosion resistance cannot be obtained. Moreover, in the case of the latter of the above, the slide fastener obtained is too rigid although designability and corrosion resistance of the article is good because of the enough denseness of the coating. Because, it is necessary to insert the conductive wire along the edge of each fastener tape when mounting the elements on the fastener tape, and the wire remains behind after the manufacture.

In contrast with the above, the present inventors have filed a patent application on an invention disclosed in Japanese Patent Publication No. 2001-8714. In the art disclosed in that Publication, an elongated body from which elements will be manufactured is electrolytically plated and is then cut to form the elements, and then the elements are mounted on fastener tapes. The aim was that in this method a slide fastener could have excellent external appearance designability.

However, regarding the elements of the slide fastener, the color of the substrate is seen at the cut surfaces along the longitudinal direction of the element engaging part even after a pair of slide fastener tapes have been engaged together. Because, the engaging head parts to engage the elements one another are formed by making the cut surfaces of the elongated body project out. Moreover, depending on the material of the substrate, a problem may arise with regard to the corrosion resistance.

### SUMMARY OF THE INVENTION

An object of the present invention is to provide a slide fastener which has high decorativeness, and which does not have problems of functionality or product quality such as corrosion resistance. Another object of the present invention is to provide a method of manufacturing an attachment having a plurality of constituent members, and the attachment includes slide fasteners.

The present invention comprises the following forms.
(1) A slide fastener in which a plurality of elements are mounted on an edge of a pair of mutually facing slide fastener tapes, characterized in that each of the elements has a facing surface where the elements face one another in a longitudinal direction of the slide fastener tapes and has a surface other than the facing surface, said facing surface has a coating formed thereon through an electroless plating, and said surface other than the facing surface has a coating formed thereon through an electrolytic plating.
(2) A slide fastener according to (1) above, wherein a thickness of the coating on said surface other than the facing surface is 0.005 to 5µm, and a thickness of the coating on said facing surfaces is 0.005 to 0.2µm.
(3) A slide fastener according to (1) or (2) above, wherein the coating on said surface other than the facing surface is a single-layer or multi-layer coating selected from Sn, Cu-Sn alloy, Cu-Sn-Zn alloy, Rh, Pd, and Cu plating, and the coating on said facing surface is Sn plating.
(4) A slide fastener according to any of (1) through (3) above, characterized in that a stop is further mounted at an end of each of the slide fastener tapes in the longitudinal direction thereof, and the stop has a coating formed through the electroless plating on a surface thereof perpendicular to said longitudinal direction, and has a coating formed through the electrolytic plating on a surface thereof parallel to said longitudinal direction.
(5) A slide fastener according to any of (1) through (4) above, characterized in that a base material thereof is one selected from red brass, brass, and an alloy represented by an undermentioned general formula:

   CuₐZn_{b}Mn_{c}M_{d}Xₑ

   where M is at least one element selected from Al and Sn, X is at least one element selected from Si, Ti and Cr, and regarding a, b, c, d and e, in mass%, 0 ≤ b ≤ 22, 7 ≤ c ≤ 20, 0 ≤ d ≤ 5, 0 ≤ e ≤ 0.3, and a is a remainder, with unavoidable impurities being contained.
(6) A method of manufacturing an attachment having a plurality of constituent members, characterized by electrolytic plating a surface of an elongated body made of a metal or an alloy, cutting the elongated body into a plurality of constituent members, mounting the constituent members on an attachment, and electroless plating the constituent members on the attachment.
(7) A method of manufacturing an attachment having a plurality of constituent members according to (6) above, characterized in that the attachment having a plurality of constituent members is a slide fastener or a slide fastener chain, the attachment is a pair of slide fastener tapes, and the constituent members are a plurality of elements and/or stops.
(8) A method of manufacturing an attachment having a plurality of constituent members according to (6) or (7) above, characterized in that a thickness of a coating formed through the electrolytic plating is 0.005 to 5µm, and a thickness of a coating formed through the electroless plating 0.005 to 0.2µm.
(9) A method of manufacturing an attachment having plurality of constituent members according to any of (6) through (8) above, characterized in that a single-layer or multi-layer coating selected from Sn, Cu-Sn alloys, Cu-Sn-Zn alloys, Rh, Pd, and Cu is formed through the electrolytic plating, and a coating of Sn is formed through the electroless plating.

The slide fastener of the present invention will now be described in detail with reference to the drawings.

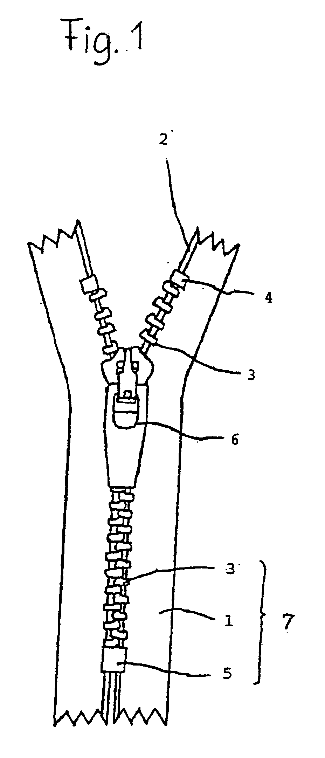

Fig. 1 is a conceptual drawing of the slide fastener. As shown in Fig. 1, the slide fastener comprises a pair of fastener tapes 1 each of which has a core part 2 formed at an edge on one side of the tapes, elements 3 that are crimped (mounted) onto the core part 2 of each fastener tape 1 at a prescribed interval, a top stop 4 and a bottom stop 5 that are crimped onto the core part 2 of each fastener tape 1 at the top and bottom ends respectively of the elements 3, and a slider 6 that is disposed between facing pairs of elements 3 and can be freely slid in an up/down direction to engage or separate the elements 3. In the above, a slide fastener chain 7 is an article obtained by mounting elements 3 onto the core part 2 of a fastener tape 1.

Although not shown in the drawings, the slider 6 as shown in Fig. 1 is manufactured by the following steps: pressing a long plate-shaped body having a rectangular cross section, through several stages; cutting the body at a prescribed interval to manufacture slider bodies; and then mounting a spring or pull on the slider body if necessary. The pulls are also manufactured from the plate-shaped body having a rectangular cross section, by punching out into a prescribed shape, and then are crimped onto the slider bodies. The bottom stop 5 may be a separable fitting comprising an insert pin, a box pin and a box, so that the pair of slide fastener chains can be separated through the opening by the slider.

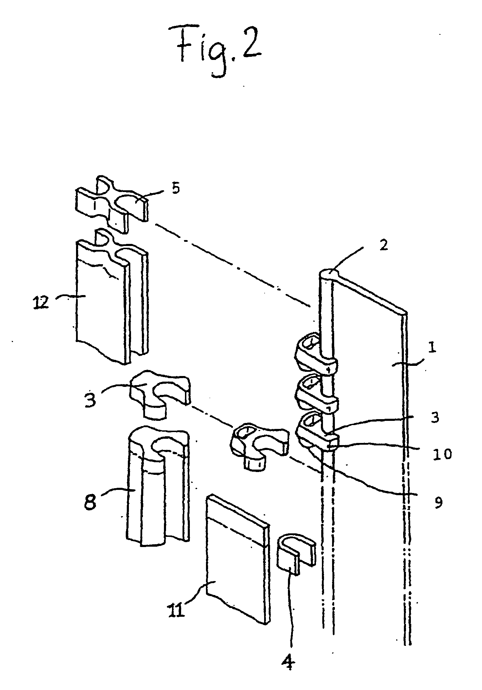

Fig. 2 shows a method of manufacturing the elements 3, the top stops 4 and the bottom stops 5 of the slide fastener shown in Fig. 1, and also a method of attaching these to the core parts 2 of the fastener tapes 1. As shown in the drawing, the elements 3 is prepared by the below steps: a deformed wire 8 having an approximately Y-shaped cross section is cut into pieces of a prescribed dimension; and pressing the pieces to form an engaging head part 9 on each element 3. And then, foot parts 10 of each element 3 are crimped onto the core part 2 of the fastener tape 1, and thus mounting the element 3 on the fastener tape 1.

The top stop 4 is prepared by cutting a rectangular wire 11 having a rectangular cross section into pieces of a prescribed dimension, and bending the pieces to form an approximately C-shaped cross section. Subsequently, the top stop 4 is crimped onto the core part 2 of the fastener tape 1, thus mounting on the top stop 4. The bottom stop 5 is prepared by cutting a deformed wire 12 having an approximately X-shaped cross section into pieces of a prescribed dimension. And then, the top stop 5 is crimped onto the core part 2 of the fastener tape 1, thus mounting on the top stop 5.

Note that in Fig. 1, it appears that the elements 3 and the top and bottom stops 4 and 5 are mounted onto the fastener tape 1 at the same time. But, in actual practice, elements 3 are first attached continuously onto the fastener tape 1 to manufacture a fastener chain, and then the elements 3 in regions where a stop is to be attached are removed from the fastener chain. Next, the prescribed stops 4 and 5 are mounted on in these regions near to the elements 3.

In the present invention, electrolytic plating is carried out on the deformed wire 8 having an approximately Y-shaped cross section to manufacture the elements 3, the deformed wire 12 having an approximately X-shaped cross section to manufacture the bottom stops 5, and the rectangular wire 11 having a rectangular cross section to manufacture the top stops 4. After the elements 3, the stops 4 and 5 have been mounted onto the fastener tape 1, electroless plating is performed. Thus, all of the outer surfaces of the elements and stops are plated.

Of the outer surfaces of the elements, the surface other than the cut surfaces are covered with a dense coating formed through the electrolytic plating. These plated surfaces have good designability due to the dense coating. Moreover, these surfaces become smooth and hence the lustrousness is also excellent, because the surface other than the cut surfaces that will be subjected to the electrolytic plating are smooth after the rolling. On the other hand, a coating of the cut surfaces is not as good as above in terms of designability, but the color can be matched to the color of the surfaces other than the cut surfaces. In the case of a slide fastener, the cut surfaces are partly seen from the outside, but the cut surfaces do not require a decorativeness and lustrousness as high as for the surfaces other than the cut surfaces, and hence there is no particular problem. Moreover, the surface other than the cut surfaces are more prone to wear from the sliding of the slider, but by forming a dense coating through electrolytic plating on the surfaces other than the cut surfaces as described above, these surfaces can also have good wear resistance.

In the present invention, it is preferable to make the thickness of the coating formed through the electrolytic plating 0.005 to 5µm, and the thickness of the coating formed through the electroless plating 0.005 to 0.2µm. It is preferable to make the thickness of the coating formed through the electrolytic plating be in the above numerical range from the point of view of the product quality such as designability and corrosion resistance. As well as improvement of such qualities, the following problems are prevented: the coatings flake off due to wear through sliding of the slider; the coatings flake off from or crack on processed faces during cold deformation processes such as cutting, pressing, bending and crimping.

On the other hand, the thickness of the coating formed through the electroless plating is stipulated with considering the product quality such as designability and corrosion resistance, in particular designability. However, if this coating thickness exceeds the above range, then the coating formed through the electrolytic plating will be damaged and hence designability and in particular lustrousness of the coating will tend to be marred. Accordingly, it is desirable to make the thickness of the coating formed through the electroless plating be in the above range.

As examples of the electrolytic plating to form the coating, such as Sn plating, Cu-Sn alloy plating, Cu-Sn-Zn alloy plating, Rh plating, Pd plating, Au plating, Ag plating, Cu plating, black Ni plating and so on may be included. As examples of the electroless plating, such as Sn plating and so on may be included. With a slide fastener, especially a fastener having an excellent whiteness giving a classy feel, a single-layer coating is preferably formed through the electrolytic plating such as Sn plating, Cu-Sn alloy plating, Cu-Sn-Zn alloy plating, Rh plating and Pd plating; in particular, by using Cu-Sn alloy plating, Cu-Sn-Zn alloy plating, Rh plating or Pd plating, the coating properties such as strength, hardness, corrosion resistance and adhesion can also be excellent. The coating formed through the electrolytic plating can be a multi-layer, in which case Cu is plated as a foundation coating and then on the surface thereof the above-mentioned electrolytic plating such as Sn plating, Cu-Sn alloy plating, Cu-Sn-Zn alloy plating, Rh plating and Pd plating is performed. Furthermore, the surface plated coating can also be a multi-layer, with Sn plating, Cu-Sn alloy plating or Cu-Sn-Zn alloy plating as a lower layer, and Rh plating or Pd plating as an upper layer. By using a multi-layer coating in this way, the surface luster and the surface quality can be improved. The coating formed through the electroless plating is preferably made to be Sn plating.

According to another aspect of the present invention, a white slide fastener can be provided that not only has good product quality such as designability and wear resistance but also copes with the nickel allergy problem. Following is a description of this form.
The material used as the base material of the slide fastener is preferably an alloy represented by the undermentioned general formula.

General formula: CuₐZn_{b}Mn_{c}M_{d}Xₑ

Where, M is at least one element selected from Al and Sn, X is at least one element selected from Si, Ti and Cr, and regarding a, b, c, d and e, in mass%, 0 ≤ b ≤ 22, 7 ≤ c ≤ 20, 0 ≤ d ≤ 5, 0 ≤ e ≤ 0.3, and a is a remainder, with unavoidable impurities being contained.
In the above general formula, more preferably M is Al, and b, c and d are 0.5 ≤ b < 5, 7 ≤ c ≤ 17, and 0.5 ≤ d ≤ 4, respectively.
By using the alloy having a composition as above, the base material can have a color tone such that a* and b*, which represent the color tone as stipulated in JIS Z 8729, are -2 < a* < 5 and -3 < b* < 16.

Note that the 'color tone' mentioned in the present specification is expressed using the manner for indicating the color of objects stipulated in JIS Z 8729, and is represented by the values of the lightness index L* (lightness: L star) and the chromaticity indexes a* (greenness to redness: a star) and b* (blueness to yellowness: b star).
In particular, to make an alloy be white, the closer to an achromatic color the better, and hence the above numerical ranges for the chromaticity indexes a* and b* are more preferably 0 < a* < 2 and 7 < b* < 16.

Regarding coatings formed on the base material by plating, from the point of view of the whiteness, examples of the electrolytic plating desirably include such as Sn plating, Cu-Sn alloy plating, Cu-Sn-Zn alloy plating, Rh plating and Pd plating, and example of the electroless plating preferably includes Sn plating, as described earlier. The coatings displaying a high degree of whiteness can be formed by using such plated coatings. On that occasion, the color tone of the coating can be such that a* and b*, which represent the color tone as stipulated in JIS Z 8729, are 0 < a* < 2 and 7 < b* < 16. Moreover, by this aspect described above, even if the base material happens to be exposed due, for example, to the coatings formed on the surfaces flaking off or cracking, no serious impairment on the external appearance designability is expected because of the whiteness of the base material. Furthermore, even in the case of a slide fastener, because neither the base material nor the coatings contain Ni, the problem of nickel allergy does not occur.

According to yet another aspect of the present invention, a white slide fastener can be provided that is satisfactory in terms of designability, corrosion resistance and so on, and copes with the nickel allergy problem, and also copes with needle detectors.
In this aspect, red brass, brass or the like is used as the base material. As a result, the problem of nickel allergy does not occur because red brass and brass do not contain nickel. Further, a needle detector does not malfunction though this problem occurred before. Moreover, whiteness of the external appearance can be realized through the plated coatings. In this case, to bestow whiteness, examples of the coating formed through the electrolytic plating preferably include such as Sn plating, Cu-Sn alloy plating, Cu-Sn-Zn alloy plating, Rh plating and Pd plating, and as the coating formed through the electroless plating, Sn plating is preferable, as described earlier. As a result, a slide fastener having a high degree of whiteness in terms of the external appearance can be provided.

### BRIEF DESCRIPTION OF THE DRAWINGS

Fig. 1 is a conceptual drawing of a slide fastener.

Fig. 2 is a drawing to explain a method of attaching a bottom stop, a top stop and elements to a slide fastener.

### DETAILED DESCRIPTION OF THE PREFERRED EMBODIMENTS

Following is a specific description of the present invention through examples. However, the present invention is not limited whatsoever by the following examples.

### EXAMPLE 1

Red brass having a composition of Cu₈₅Zn₁₅ by mass% was melted in a continuous casting apparatus, and then continuous wires were formed by casting through a carbon die of diameter 8mm. The continuous wires obtained were subjected to drawing and rolling, thus manufacturing continuous deformed wires having an approximately X-shaped cross section and an approximately Y-shaped cross section and a continuous rectangular wire, as shown in Fig. 2. The continuous deformed wires and the continuous rectangular wire obtained were electrolytically plated by use of Cu-Sn-Zn alloy, and were then subjected to several cold workings that are cutting, pressing, bending and crimping. And, the constituent members thus obtained were mounted on fastener tapes, thus producing a slide fastener. The slide fastener was electroless-plated with Sn, thus producing the final product.

The above-mentioned electrolytic plating was carried out under the following conditions in an alkaline cyanide bath.
Composition of Cu-Sn-Zn alloy plating solution:

| | |
|---|---|
| Metallic copper | 5 to 20g/l |
| Metallic tin | 10 to 50g/l |
| Metallic zinc | 0.1 to 3g/l |

Treatment temperature: 15 to 50°C
Current density: 0.1 to 10A/dm² Through the above treatment, Cu-Sn-Zn alloy coatings of thickness 0.005 to 5µm were formed on the surfaces of the deformed wires and the rectangular wire. The alloy composition of the coatings obtained was Cu₅₀₋₅₅Sn₃₀₋₃₅Zn₁₀₋₁₅ in terms of mass%.

The slide fastener was electroless plated by immersion into an acidic bath for 1 minute in under conditions of an Sn concentration of 14 to 24g/l and a temperature of 15 to 52°C.
Through the above electroless plating, an Sn coating of thickness 0.1µm was formed on the cut surfaces of the stops and the elements of the slide fastener. Moreover, the Sn coating was also formed in places on top of the Cu-Sn-Zn alloy plated coating that was formed through the electrolytic plating, but this did not mar the decorativeness or the lustrousness.

The slide fastener obtained as above had a high surface whiteness, and its external appearance displayed excellent decorativeness and lustrousness. Moreover, because neither the base material nor the coatings contained Ni, there was no nickel allergy problem. Further, when detecting for broken needles using a needle detector, the needle detector never malfunctioned.

### EXAMPLE 2

The immersion time during the electroless plating in Example 1 was changed, thus manufacturing slide fasteners having coatings of various thicknesses. The slide fasteners obtained were evaluated with regard to the coating thickness, the decorativeness and the lustrousness based on the immersion time.
The evaluation results are shown in Table 1.

**Table 1**

| Evaluation table | | | | |
|---|---|---|---|---|
| | Immersion time (s) | Coating thickness (µm) | Electroless plated coating | |
| | | | Lustrousness | Whiteness |
| Example 2-1 | 0 | 0 | ○ | × |
| Example 2-2 | 10 | 0.05 | ○ | ○ |
| Example 2-3 | 20 | 0.06 | ○ | ○ |
| Example 2-4 | 30 | 0.06 | ○ | ○ |
| Example 2-5 | 60 | 0.10 | ○ | ○ |
| Example 2-6 | 120 | 0.10 | ○ | ○ |
| Example 2-7 | 300 | 0.22 | × | ○ |

From the evaluation results shown in Table 1, in the case that a coating of thickness more than 0.2µm is formed on the cut surfaces, the lustrousness of the coating formed through the electrolytic plating is lost, and hence the decorativeness drops.
It is theorized that this trend caused by leaching of Cu and Zn components in the Cu-Sn-Zn alloy coating formed through the electrolytic plating, into the electroless plating bath, and by replacing such component with the Sn in the bath.

It is presumed that this replacement occurs even in the case that the thickness of the coating formed through the electroless plating on the cut surfaces is low. But, the greater the amount of replacement the more the lustrousness of the coating formed through the electrolytic plating is lost, and hence once the thickness of the coating formed through the electroless plating on the cut surfaces reaches about 0.2µm, the effect of the less lustrousness becomes more apparent in terms of the external appearance.
From the above results, to keep the lustrousness, it is necessary to make the thickness of the coating formed on the cut surfaces through the electroless plating not more than 0.2µm.

### Example 3

Continuous wires were formed as in Example 1 using brass having a composition of Cu₇₀Zn₃₀ by mass% as a raw material, and the continuous deformed wires and the continuous rectangular wire were formed from these continuous wires. Then, as in Example 1, the wires were electrolytically plated and then subjected to several types of cold working to manufacture a slide fastener. Next, the slide fastener was electroless plated to produce the final product. The slide fastener obtained in the present Example showed a high surface whiteness, and in terms of the external appearance, it had excellent decorativeness and lustrousness. Moreover, because neither the base material nor the coatings contained Ni, there was no nickel allergy problem. Furthermore, when detecting for broken needles using a needle detector, the detector never malfunctioned.

### Example 4

Continuous wires were produced in the same way as Example 1 using an alloy having a composition of Cu₇₃Zn₁₅Mn₁₂ by mass% as a raw material, and the continuous deformed wires and the continuous rectangular wire were formed from these continuous wires. As in Example 1, the wires were electrolytically plated and then subjected to several cold workings to produce a slide fastener. Then, the slide fastener was electroless-plated, thus obtaining the final product. The slide fastener obtained in the present Example had a high surface whiteness, and the external appearance displayed excellent decorativeness and lustrousness. Moreover, there was no nickel allergy problem because neither the base material nor the coatings contained Ni.

According to the present invention, by the combination of electrolytic plating and electroless plating, it is possible to obtain an attachment having constituent members and serving as a slide fastener, for which the decorativeness is high and there are no problems in terms of functionality or product quality such as corrosion resistance. Moreover, by using materials that do not contain Ni as a base material and the coating materials, there is no nickel allergy problem. And moreover, if ferromagnetic elements are not used then an effect can be achieved whereby there will be no malfunctioning of a needle detector when detecting for broken needles using the detector.

## Claims

1. A slide fastener in which a plurality of elements (3) are mounted on an edge of a pair of mutually facing slide fastener tapes (1), each of the elements (3) having a facing surface where the elements (3) face one another in a longitudinal direction of the slide fastener tapes (1) and having a surface other than the facing surface, **characterized in that** said facing surface has a coating formed thereon by electroless plating, and said surface other than the facing surface has a coating formed thereon by electrolytic plating.

2. A slide fastener according to claim 1, wherein a thickness of the coating on said surface other than the facing surface is 0.005 to 5µm, and a thickness of the coating on said facing surfaces is 0.005 to 0.2µm.

3. A slide fastener according to claim 1 or 2, wherein the coating on said surface other than the facing surface is a single-layer or multi-layer coating selected from Sn, Cu-Sn alloy, Cu-Sn-Zn alloy, Rh, Pd, and Cu plating, and the coating on said facing surface is Sn plating.

4. A slide fastener according to any of claims 1 to 3, **characterized in that** a stop (4, 5) is further mounted at an end of each of the slide fastener tapes (1) in the longitudinal direction thereof, and the stop (4, 5) has a coating formed by electroless plating on a surface thereof perpendicular to said longitudinal direction, and has a coating formed by electrolytic plating on a surface thereof parallel to said longitudinal direction.

5. A slide fastener according to any of claims 1 to 4, **characterized in that** a base material thereof is one selected from red brass, brass, and an alloy represented by an undermentioned general formula:
CuₐZn_{b}Mn_{c}M_{d}Xₑ
where M is at least one element selected from Al and Sn, X is at least one element selected from Si, Ti and Cr, and regarding a, b, c, d and e, in mass%, 0 ≤ b ≤ 22, 7 ≤ c ≤ 20, 0 ≤ d ≤ 5, 0 ≤ e ≤ 0.3, and a is a remainder, with unavoidable impurities being contained.

6. A method of manufacturing a slide fastener tape (1) having a plurality of constituent members (3), **characterized by** electrolytic plating a surface of an elongated body (8) made of a metal or an alloy, cutting the elongated body (8) into a plurality of constituent members (3), mounting the constituent members on the slide fastener tape (1), and electroless plating the constituent members (3) on the slide fastener tape (1).

7. A method according to claim 6, **characterized in that** the constituent members comprise a plurality of elements (3) and/or stops (4, 5).

8. A method according to claim 6 or 7, **characterized in that** a thickness of a coating formed by electrolytic plating is 0.005 to 5µ, and a thickness of a coating formed by electroless plating 0.005 to 0.2µm.

9. A method according to one of the claims 6 to 8, **characterized in that** a single-layer or multi-layer coating selected from Sn, Cu-Sn alloys, Cu-Sn-Zn alloys, Rh, Pd, and Cu is formed by electrolytic plating, and a coating of Sn is formed by electroless plating.

10. A slide fastener tape (1) for a slide fastener according to one of the claims 1 to 5, the slide fastener tape (1) having a plurality of elements (3) having a facing surface where the elements (3) face one another in a longitudinal direction of the slide fastener tape (1) and having a surface other than the facing surface, **characterized in that** said facing surface has a coating formed thereon by electroless plating, and said surface other than facing surface has a coating formed thereon by electrolytic plating.

## Patentansprüche

1. Reißverschluß mit einer Vielzahl von Elementen (3), die an einer Kante eines Paars von einander zugewandten Reißverschlußbändem (1) befestigt sind, wobei jedes Element (3) eine zugewandte Oberfläche aufweist, und die Elemente (3) sich gegenseitig in einer Längsrichtung der Reißverschlußbänder (1) gegenüberliegen und eine andere als die zugewandte Oberfläche aufweisen, **dadurch gekennzeichnet, daß** die zugewandte Oberfläche eine Beschichtung aufweist, die auf dieser durch elektrodenloses Beschichten ausgebildet ist, und die andere als die zugewandte Oberfläche eine Beschichtung aufweist, die auf dieser durch elektrolytisches Beschichten ausgebildet ist.

2. Reißverschluß nach Anspruch 1, wobei eine Stärke der Beschichtung auf der anderen als der zugewandten Oberfläche zwischen 0.005 und 5 µm beträgt und eine Stärke der Beschichtung auf der zugewandten Oberfläche 0,005 bis 0,2 µm beträgt.

3. Reißverschluß nach Anspruch 1 oder 2, wobei die Beschichtung auf der anderen als der zugewandten Oberfläche eine einlagige oder mehrlagige Beschichtung ist, die ausgewählt ist aus einer Gruppe umfassend: Sn, Cu-Sn-Legierung, Cu-Sn-Zn-Legierung, Rh, Pd und Cu, und die Beschichtung auf der zugewandten Oberfläche eine Sn-Beschichtung ist.

4. Reißverschluß nach einem der Ansprüche 1 bis 3, **dadurch gekennzeichnet, daß** ferner ein Anschlag (4, 5) an einem Ende jedes Reißverschlußbands (1) in dessen Längsrichtung befestigt ist und der Anschlag (4, 5) eine Beschichtung aufweist, die auf einer seiner Oberflächen senkrecht zu der Längsrichtung durch elektrodenloses Beschichten ausgebildet ist, sowie eine Beschichtung, die auf einer seiner Oberflächen parallel zu der Längsrichtung durch elektrolytisches Beschichten ausgebildet ist.

5. Reißverschluß nach einem der Ansprüche 1 bis 4, **dadurch gekennzeichnet, daß** eines seiner Basismaterialien ausgewählt ist aus: roter Messing, Messing und eine Legierung, die durch eine nicht bestimmte, allgemeine Formel dargestellt ist:
CuₐZn_{b}Mn_{c}M_{d}Xₑ,
wobei M zumindest ein Element aus der folgenden Gruppe ist: Al und Sn, X zumindest ein Element aus der folgenden Gruppe ist: Si, Ti und Cr, und für a, b, c, d und e in Massen-% gilt: 0 ≤ b ≤ 22, 7 ≤ c ≤ 20, 0 ≤ d ≤ 5, 0 ≤ e ≤ 0,3, und a ein Rest mit den unvermeidbar enthaltenen Unreinheiten ist.

6. Verfahren zum Herstellen eines Reißverschlußbandes (1) mit einer Vielzahl von einzelnen Gliedern (3), **gekennzeichnet durch** elektrolytisches Beschichten einer Oberfläche eines länglichen Körpers (8), der aus einem Metall oder einer Legierung hergestellt ist, Schneiden des länglichen Körpers (8) in eine Vielzahl einzelner Gliedern (3), Befestigen der einzelnen Glieder auf dem Reißverschlußband (1) und elektrodenloses Beschichten der einzelnen Glieder (3) auf dem Reißverschlußband (1).

7. Verfahren nach Anspruch 6, **dadurch gekennzeichnet, daß** die einzelnen Glieder eine Vielzahl von Elementen (3) und/oder Anschlägen (4, 5) umfassen.

8. Verfahren nach einem der Ansprüche 6 oder 7, **dadurch gekennzeichnet, daß** die Stärke einer durch elektrolytisches Beschichten ausgebildeten Beschichtung zwischen 0,005 und 5 µm beträgt und die Stärke einer durch elektrodenloses Beschichten ausgebildete Beschichtung zwischen 0,005 und 0,2 µm beträgt.

9. Verfahren nach einem der Ansprüche 6 bis 8, **dadurch gekennzeichnet, daß** eine einlagige oder mehrlagige Beschichtung, die ausgewählt ist aus einer Gruppe umfassend: Sn, Cu-Sn-Legierungen, Cu-Sn-Zn-Legierungen, Rh, Pd und Cu, durch elektrolytisches Beschichten ausgebildet wird und eine Beschichtung aus Sn durch elektrodenloses Beschichten ausgebildet wird.

10. Reißverschlußband (1) für einen Reißverschluß nach einem der Ansprüche 1 bis 5, wobei das Reißverschlußband (1) eine Vielzahl von Elementen (3) aufweist, die eine zugewandte Oberfläche aufweisen, an der sich die Elemente (3) in einer Längsrichtung des Reißverschlußbands (1) gegenüberliegen, und mit einer anderen als der zugewandten Oberfläche, **dadurch gekennzeichnet, daß** die zugewandte Oberfläche eine Beschichtung aufweist, die auf dieser durch elektrodenloses Beschichten ausgebildet ist, und daß die andere als die zugewandte Oberfläche eine Beschichtung aufweist, die auf dieser durch elektrolytisches Beschichten ausgebildet ist.

## Revendications

1. Fermeture à glissière dans laquelle une pluralité d'éléments (3) sont installés sur un bord d'une paire de rubans de la fermeture à glissière situés en face l'un de l'autre (1), chacun des éléments (3) ayant une surface opposée dans laquelle les éléments (3) sont situés face à face dans un sens longitudinal des rubans de la fermeture à glissière (1) et ayant une surface autre que la surface opposée, **caractérisée en ce que** la dite surface opposée comprend un revêtement formé sur celle-ci par dépôt autocatalytique, et ladite surface autre que la surface opposée comprend un revêtement formé sur celle-ci par dépôt électrolytique.

2. Fermeture à glissière selon la revendication 1, dans laquelle une épaisseur du revêtement sur ladite surface autre que la surface opposée est comprise entre 0,005 et 5 µm, et une épaisseur du revêtement sur lesdites surfaces opposées est comprise entre 0,005 et 0,2 µm.

3. Fermeture à glissière selon la revendication 1 ou 2, dans laquelle le revêtement sur ladite surface autre que la surface opposée est un revêtement monocouche ou multicouche choisi parmi un dépôt de Sn, d'alliage Cu-Sn, d'alliage Cu-Sn-Zn, de Rh, de Pd et de Cu, et le revêtement sur ladite surface opposée est un dépôt de Sn.

4. Fermeture à glissière selon l'une quelconque des revendications 1 à 3, **caractérisée en ce qu'**une butée (4, 5) est également fixée à une extrémité de chacun des rubans de la fermeture à glissière (1) dans le sens longitudinal de celle-ci, et la butée (4, 5), présente un revêtement formé par un dépôt autocatalytique sur une surface de celle-ci perpendiculaire au dit sens longitudinal, et présente un revêtement formé par dépôt électrolytique sur une surface de celle-ci parallèle au dit sens longitudinal.

5. Fermeture à glissière selon l'une quelconque des revendications 1 à 4, **caractérisée en ce qu'**un matériau de base de celle-ci est un choisi parmi le laiton rouge, le laiton et un alliage représenté par une formule générale mentionnée ci-dessous :
CuₐZn_{b}Mn_{c}M_{d}Xₑ
dans laquelle M est au moins un élément choisi parmi Al et Sn, X est au moins un élément choisi parmi Si, Ti et Cr, et concernant a, b, c, d et e, en pourcentage massique, 0 ≤ b ≤ 22, 7 ≤ c ≤ 20, 0 ≤ d ≤ 5, 0 ≤ e ≤ 0,3, et a est un résidu, des impuretés inévitables étant contenues.

6. Procédé de fabrication d'un ruban de fermeture à glissière (1) ayant une pluralité d'éléments constituants (3), **caractérisé par** l'étape consistant à effectuer un dépôt électrolytique sur une surface d'un corps allongé (8) constitué d'un métal ou d'un alliage, couper le corps allongé (8) en une pluralité d'éléments constituants (3), fixer les éléments constituants sur le ruban de la fermeture à glissière (1), et effectuer un dépôt autocatalytique sur les éléments constituants (3) sur le ruban de la fermeture à glissière (1).

7. Procédé selon la revendication 6, **caractérisé en ce que** les éléments constituants comprennent une pluralité d'éléments (3) et/ou de butées (4, 5).

8. Procédé selon la revendication 6 ou 7, **caractérisé en ce qu'**une épaisseur d'un revêtement formé par dépôt électrolytique est comprise entre 0,005 et 5 µm, et **en ce qu'**une épaisseur d'un revêtement formé par dépôt autocatalytique est comprise entre 0,005 et 0,2 µm.

9. Procédé selon l'une des revendications 6 à 8, **caractérisé en ce qu'**un revêtement monocouche ou multicouche choisi parmi Sn, des alliages Cu-Sn, des alliages Cu-Sn-Zn, Rh, Pd, et Cu est formé par dépôt électrolytique, et **en ce qu'**un revêtement de Sn est formé par dépôt autocatalytique.

10. Ruban de fermeture à glissière (1) pour une fermeture à glissière selon l'une des revendications 1 à 5, le ruban de la fermeture à glissière (1) ayant une pluralité d'éléments (3) ayant une surface opposée dans laquelle les éléments (3) sont en face les uns des autres dans un sens longitudinal du ruban de la fermeture à glissière (1) et ayant une surface autre que la surface opposée, **caractérisé en ce que** ladite surface opposée comprend un revêtement formé sur celle-ci par dépôt autocatalytique, et ladite surface autre que la surface opposée comprend un revêtement formé sur celle-ci par dépôt électrolytique.
